# EUROPÄISCHE PATENTSCHRIFT

(11) **EP 1 060 281 B1**
(45) Veröffentlichungstag und Bekanntmachung des Hinweises auf die Patenterteilung: **05.06.2002**
(21) Anmeldenummer: 99908902.2
(22) Anmeldetag: 15.02.1999
(51) Int. Cl.: C23C 4/10

(54) **WÄRMEDÄMMMATERIAL UND VERFAHREN ZUM HERSTELLEN EINES SOLCHEN**
THERMAL INSULATING MATERIAL AND METHOD FOR PRODUCING SAME
MATERIAU THERMO-ISOLANT ET SON PROCEDE DE PRODUCTION

(30) Priorität: 20.02.1998 DE 19807163
(43) Veröffentlichungstag der Anmeldung: 20.12.2000
(73) Patentinhaber: MTU Aero Engines GmbH, 80995 München (DE)
(72) Erfinder: Gadow, Rainer, 84544 Aschau am Inn (DE)
(74) Vertreter: Zacharias, Frank L.
(86) Internationale Anmeldenummer: EP9900982
(87) Internationale Veröffentlichungsnummer: WO9942630

(56) Entgegenhaltungen:
- US-A- 4 542 111
- US-A- 5 415 946

## Beschreibung

Die Erfindung betrifft ein Wärmedämmaterial, das insbesondere für Hochtemperaturanwendungen weit oberhalb von 1000°C geeignet ist und etwa in Gasturbinen, bei Flugzeugtriebwerken, Kraftwerks-Turbinen und anderen thermisch hoch belasteten Teilen, z.B. im Fahrzeugbau und in der Energietechnik, eingesetzt werden kann.

Die Erfindung betrifft ferner ein Verfahren zur Herstellung und zur Verarbeitung eines solchen Wärmedämmaterials.

Bei bekannten Wärmedämmaterialien, die gezielt für Hochtemperaturanwendungen in Wärmekraftmaschinen und in der Industrieanlagentechnik einsetzbar sind, handelt es sich um oxidische Deckschichten, die auf ein metallisches Trägerteil, etwa auf einen hochlegierten Nickel-Basis-Werkstoff einer Turbinenschaufel, aufgetragen werden. Die klassische Wärmedämmschicht besteht aus tetragonalem oder stabilisiertem ZrO₂ als Deckschicht, die in der Regel auf eine zusätzliche Zwischenschicht in Form einer niedrigerschmelzenden bzw. erweichenden Haftvermittlerschicht (HVS) aufgetragen wird, die neben weiteren Bestandteilen (Nickel, Chrom, Kobalt), um sie oxidationsbeständiger zu machen, zu einem wesentlichen Teil aus Aluminium und Yttrium, häufig noch mit Anteilen von Platin oder Palladium (bis zu 10 Gew.-%) besteht. Die keramische Deckschicht wird meist durch atmosphärisches Plasmaspritzen (APS) aufgetragen. Neuere Entwicklungen beschäftigen sich mit mittels Elektronenstrahlen aufgedampften ZrO₂-Schichten (electron beam - physical vapor deposition, EB-PVD-ZrO₂- Schichten). In den letzten Jahren sind die Anforderungen an die keramische ZrO₂-Deckschicht und die Haftvermittlerschicht ständig gestiegen. Ihre thermische Wechselbeständigkeit, ihre Schutzwirkung gegen Oxidation, sowie die Langzeitstabilität und Haftung bei steigenden Temperaturen der Verbrennungsgase zur Wirkungsgraderhöhung bei Turbinen wurden optimiert.

Als nachteilig bei den bekannten Wärmedämmschichten auf Basis von ZrO₂ hat sich erwiesen, daß durch Plasmaspritzen aufgetragene Schichten, CDV- und EB-PVD-Schichten aus stabilisiertem ZrO₂ oberhalb von 1100°C nicht ausreichend beständig sind. Bei Temperaturen oberhalb 1100°C altern die ZrO₂-Schichten schnell.

Dieser Alterungsprozeß führt zu einer partiellen Verdichtung der Schicht, parallel dazu steigt der Elastizitätsmodul der Schicht an. Durch die Verdichtung nimmt die ursprünglich gleichmäßig feine Porosität der Schicht ab und die Wärmeleitfähigkeit zu. Die Zunahme des Elastizitätsmoduls der Keramikschicht bedeutet, daß auch die Thermoschockbeständigkeit abnimmt und die "Toleranz" bzw. Wärmedehnungskompensationsfähigkeit bei den stark unterschiedlichen thermischen Ausdehnungskoeffizienten zwischen der Keramikschicht und dem metallischen Substrat abnimmt. Beide Vorgänge, die Verdichtung und der Anstieg des Elastizitätsmoduls führen während der Temperaturzyklen in einer Turbine zum Abplatzen der ZrO₂-Deckschicht.

Zusätzlich zu der Verschlechterung der rein mechanischen Eigenschaften der Deckschicht führt das dreidimensionale Sintern der ZrO₂-Schicht zur Ausbildung einer dichten Keramik mit anderen Eigenschaften als die der porösen Schicht. Da ZrO₂ ein sehr guter lonenleiter ist, wird durch die Verdichtung der Keramik der immer vorhandene oxidative Degradationsprozeß im gesamten Keramik-Metall-Verbund nicht geändert. Die Haftvermittlerschicht oxidiert bei diesem Prozeß, und zwischen der ursprünglichen Haftvermittlerschicht und der keramischen Deckschicht bildet sich eine Oxidationsproduktschicht mit anderen Eigenschaften aus. Die ursprüngliche Keramikschicht platzt somit schließlich aufgrund der veränderten mechanischen Eigenschaften des Schichtsystems ab. Dabei setzt sich die Korrosion der Haftvermittlerschicht trotz zum Teil hoch verdichteter Keramikoberflächen fort.

Der Erfindung liegt demnach die Aufgabe zugrunde, ein verbessertes Wärmedämmaterial anzugeben, das für Hochtemperaturanwendungen besser geeignet ist und das insbesondere zur Beschichtung von Turbinenschaufeln und thermisch ähnlich hoch belasteten Bauteilen geeignet ist.

Ferner soll ein geeignetes Verfahren zur Herstellung und zur Verarbeitung eines derartigen Wärmedämmaterials angegeben werden.

Diese Aufgabe wird erfindungsgemäß durch ein Wärmedämmaterial gelöst, das aus mindestens einer ersten Komponente mit mindestens einer ersten Phase, die stöchiometrisch 1 bis 80 Mol-% an M₂O₃, 0,5 bis 80 Mol-% MeO und als Rest Al₂O₃ mit zufälligen Verunreinigungen enthält, wobei M aus den Elementen Lanthan und Neodym oder Mischungen hiervon ausgewählt ist und wobei Me aus den Erdalkalimetallen, Übergangsmetallen und den seltenen Erden oder Mischungen hiervon, vorzugsweise aus Magnesium, Zink, Kobalt, Mangan, Eisen, Nickel, Chrom, Europium, Samarium oder Mischungen hiervon, ausgewählt ist.

Durch das erfindungsgemäße Wärmedämmaterial ist eine wirkungsvolle Wärmedämmung auch bei Temperaturen oberhalb von 1300°C bis über 1500°C ermöglicht, wobei gleichzeitig Sintervorgänge und damit einhergehende Alterung und Kornvergröberung im Vergleich zum ZrO₂ stark verlangsamt werden.

Als vorteilhaft hat sich erwiesen, wenn die erste Komponente 1 bis 50 Mol-% M₂O₃ und 1 bis 50 Mol-% MeO, sowie als Rest Al₂O₃ enthält.

Hierbei ist es ferner bevorzugt, wenn die erste Komponente 1 bis 20 Mol-% M₂O₃ und 2 bis 30 Mol-% MeO, sowie als Rest Al₂O₃ enthält.

Ferner hat es sich als vorteilhaft erwiesen, wenn die erste Komponente 2 bis 20 Mol-% M₂O₃ und 5 bis 25 Mol-% Meo, sowie als Rest Al₂O₃ enthält.

Hierbei ist es insbesondere bevorzugt, daß die erste Komponente 5 bis 10 Mol-% M₂O₃, etwa 10 bis 20 Mol-% MeO, sowie als Rest Al₂O₃ enthält.

Besonders vorteilhafte Eigenschaften ergeben sich, wenn die erste Komponente etwa 5 bis 9 Mol-% M₂O₃, 12 bis 17 Mol-% MeO, sowie als Rest Al₂O₃ enthält, wobei eine Zusammensetzung von etwa 7,1 Mol-% M₂O₃, etwa 14,3 Mol-% MeO, sowie als Rest Al₂O₃ die Optimalzusammensetzung darstellt.

Hierbei bildet sich als erste Phase vorzugsweise eine Hexaaluminatphase der Magnetoplumbit-Struktur der Zusammensetzung MMeAl₁₁O₁₉, was bei Verwendung von Lanthan als M und Magnesium als Me als Magnesiumaluminiumlanthanoxid mit der Summenformel MgAl₁₁LaO₁₉ bekannt ist.

Dieses Material besteht hauptsächlich aus Aluminiumoxid, in das in regelmäßigen Abständen Monolagen aus Lanthanoxid und Aluminiumoxid eingebaut sind. Dieser Einbau von La₂O₃ führt zur Ausbildung einer Schichtstruktur mit einer charakteristischen plättchenförmigen Struktur der Kristalle. Diese Magnetoplumbit-Phase bildet sich nur in einem eng begrenzten Zusammensetzungsbereich. Die typische Zusammensetzung LaAl₁₁O₁₈ besitzt, strukturell bedingt, sehr viele kationische (ca. 8 % Al) und anionische (ca. 5 % O) Leerstellen im Gitter, die eine Diffusion von Atomen durch die Struktur erlauben. Durch Zudotierung von zweiwertigen Kationen mit kleinem Ionenradius (tyischerweise Mg⁺⁺, Mn⁺⁺, Co⁺⁺, Zn⁺⁺ etc.) erweitert sich der Homogenitätsbereich der Phase bis zu LaMgAl₁₁O₁₉. In dieser idealen Zusammensetzung LaMgAl₁₁O₁₉ besitzt die Verbindung nahezu keine Schwankungsbreite in ihrer Zusammensetzung mehr.

Bei einer weiteren Erhöhung der Dotierung mit MgO und La₂O₃ (bzw. MeO und M₂O₃) bilden sich wieder Defekte in der Struktur aus, und es bildet sich ein Mehrphasengebiet aus LaMgAl₁₁O₁₉, MgAl₂O₄, LaAlO₃ und MgO.

Bei der erfindungsgemäßen Optimalzusammensetzung führt die Zugabe von MeO zu einem Abbau von Leerstellen im Gitter. Dies bedeutet, daß das Material bei der Zusammensetzung LaMgAl₁₁O₁₉ (MMeAl₁₁O₁₉) keinerlei kristallographische Defekte in der Struktur mehr besitzt, oder anders formuliert, alle Leerstellen in der Struktur sind durch Me (Mg) und ein zusätzliches O-Atom besetzt. Diese vollständige Besetzung aller vorhandenen Gitterplätze in der Struktur führt zu der erwünschten hohen thermochemischen und Phasenstabilität im Temperaturbereich oberhalb von 1100°C.

Ein weiterer wichtiger Vorteil des erfindungsgemäßen Wärmedämmaterials besteht darin, das das Material weitgehend inert gegen Alkaligehalte (Na₂O, NaCl, K₂O, KCl) des Brennergases bzw. der umgebenden Atmosphäre ist.

Während bisherige, auf ZrO₂ basierende Wärmedämmaterialien mit den Hydroxiden oder Carbonaten von Na₂O und K₂O, oder dem in Meeresnähe bzw. im Winter in der Atmosphäre enthaltenen NaCl niedrigschmelzende Phasen bilden, die zu einer starken Verdichtung der Spritzschicht bei Anwendungstemperaturen von 1000°C führen, führt ein solcher Angriff bei dem erfindungsgemäßen Wärmedämmaterial eher zu einem erhöhten Plattenwachstum, was die Verdichtung, d.h. Versintern der Deckschicht anschließend wesentlich erschwert.

Ein weiterer Vorteil des erfindungsgemäßen Wärmedämmaterials besteht in einem günstigen thermischen Ausdehnungskoeffizienten, der zwischen 9,5 und 10,7 x 10⁻⁶[K⁻¹] im Temperaturbereich zwischen Raumtemperatur und 1200°C liegt und somit in einem zur Beschichtung von hochwarmfesten Stählen günstigen Bereich, die bei Ausdehnungskoeffizienten von etwa 10 bis 12 x 10⁻⁶[K⁻¹] liegen.

Mit dem erfindungsgemäßen Wärmedämmaterial wird ein Aufbringen von dünnen, sehr wirkungsvollen Wärmedämmschichten auf Grundkörper etwa aus Chromnickelstählen ermöglicht, die eine außerordentlich hohe Temperatur- und Langzeitbeständigkeit aufweisen und bei denen auch nach zahlreichem thermischem Zyklieren ein Abplatzen der Wärmedämmschicht vom Trägermaterial wirkungsvoll vermieden wird.

Das erfindungsgemäße Wärmedämmaterial kann bevorzugt durch thermisches Spritzen, insbesondere durch Plasmaspritzen, als Wärmedämmschicht auf den zu beschichtenden Grundkörper aufgebracht werden.

Um eine bevorzugte Kristallisation des Aluminats während des Plasmaspritzens, sowie eine erhöhte Haftung und Thermoschock-Beständigkeit zu erreichen, kann die erste Komponente zusätzlich noch durch eine zweite Komponente dotiert werden, die vorzugsweise weitgehend unlöslich in der Hexaaluminatphase ist und vorzugsweise etwa 0,001 bis 20 Gew.-%, insbesondere mit etwa 0,1 bis 10 Gew.-% zur ersten Komponente zugesetzt wird, wobei insbesondere der Bereich von 0,1 bis etwa 3 Gew.-% besonders bevorzugt ist.

Die zweite Komponente kann hierbei zumindest einen der Bestandteile ZrO₂ in monokliner, tetragonaler oder kubischer Form, La₂Zr₂O₇, MgZrO₃, Nd₂O₃, HfO₂, Y₂O₃, Yb₂O₃, Eu₂O₃, La₂Hf₂O₇, MgHfO₃, Oxide oder Salze der Alkalimetalle Natrium, Kalium, Lithium, oder Mischungen oder Legierungen dieser Bestandteile enthalten.

Sofern ZrO₂ in tetragonaler oder kubischer Form zugesetzt wird, so ist dieses vorzugsweise mit MgO, CaO oder Y₂O₃ dotiert.

Bei den Salzen der Alkalimetalle Natrium, Kalium und Lithium, die gleichfalls als Dotierung der ersten Komponente zugesetzt werden können, kann es sich um Karbonate, Chloride, Nitrate, Acetate, Formiate, Citrate, Sulfate, Hydrogenkarbonate oder Mischsalze dieser Metalle handeln.

Das erfindungsgemäße Wärmedämmaterial wird vorzugsweise zunächst in Pulverform hergestellt und kann anschließend etwa durch Plasmaspritzen als Wärmedämmschicht auf Bauteile aufgetragen werden oder aber auf pulvertechnologischem Wege zur Herstellung von Massivbauteilen verarbeitet werden oder zu einem Keramikschaum weiter verarbeitet werden.

Gemäß einer ersten Alternative wird das pulverförmige Wärmedämmaterial hergestellt, indem in einem wässrigen oder einem alkoholischen Medium, insbesondere Methanol, Ethanol oder Isopropanol, nicht-lösliches Oxid, ein Hydroxid oder ein Oxidhydrat von Al₂O₃ als Ausgangsmaterial verwendet wird, die übrigen Bestandteile der ersten Komponente als lösliche Salze, vorzugsweise als Karbonate, Hydrogenkarbonate oder Acetate, zugesetzt und in dem Medium gelöst werden, die gebildete Suspension vorzugsweise nach einem Mahl- und Dispergierschritt getrocknet, vorzugsweise sprühgetrocknet wird, und das sich ergebende Pulver anschließend einer Glühbehandlung unterzogen wird.

Bei dieser naßchemischen Prozeßführung, bei der ein nicht-lösliches Trägerpulver beschichtet wird, läßt sich eine relativ gleichmäßige Verteilung und gute Vermischung der verschiedenen Zusätze erreichen, so daß bei der anschließenden Glühbehandlung vorzugsweise bei Temperaturen von 500 bis 1800°C unter Luft über eine Dauer zwischen etwa 0,5 und 20 Stunden die Pulver zu einphasigen, oxidischen Agglomeraten mit mittleren Durchmessern zwischen etwa 1 bis 200 µm und mit einer spezifischen Oberfläche zwischen 0,1 bis 40 m²/g z.B. im Drehrohrofen gebrannt werden.

Gemäß einer zweiten Alternative der Pulverherstellung werden die Bestandteile der ersten Komponente in Pulverform als Oxide oder Salze in einem Mischer, vorzugsweise einer Trommel- oder Taumelmühle gemischt, wobei bevorzugt Mahlkörper aus Al₂O₃ oder stabilisiertem ZrO₂ verwendet werden. Anschließend wird das Pulver granuliert und einer Glühbehandlung unterzogen.

Bei diesem sogenannten "mixed-oxide-Verfahren" handelt es sich um die einfachste Variante der Herstellung, jedoch ist es hierbei etwas schwieriger, eine homogene Mischung zu erreichen. Auch nach dem Mischvorgang bleibt das hergestellte Pulver zunächst mehrphasig.

Die mehrphasige Oxidmischung wird vorzugsweise mit Bindern versetzt und granuliert, bevor die Glühbehandlung durchgeführt wird, die wiederum vorzugsweise an Luft, vorzugsweise über eine Zeitdauer zwischen 0,5 und 20 Stunden in einem Temperaturbereich zwischen etwa 300°C und 1800°C erfolgen kann.

Bei der Glühbehandlung bildet sich ein homogenes oxidisches Pulver, wobei das Granulat mittlere Durchmesser zwischen etwa 1 bis 200 µm und eine spezifische Oberfläche zwischen 0,1 bis 40 m²/g aufweist.

Wird dagegen, wie zuvor erwähnt, bei der Mischung in einem flüssigen Medium bzw. mit einer hochfeststoffhaltigen Suspension gearbeitet, so erfolgt anschließend zunächst eine Trocknung, die vorzugsweise als Sprühtrocknung durchgeführt werden kann, bevor sich die Glühbehandlung anschließt.

Eine dritte Alternative zur Herstellung eines pulverförmigen Wärmedämmaterials besteht darin, das Pulver über einen Sol-Gel-Prozeß mit anschließender Trocknung und Glühbehandlung herzustellen.

Durch die Verwendung eines Sol-Gel-Prozesses läßt sich eine besonders gute chemische Homogenität und eine vollständige Phasenumwandlung während der Glühbehandlung erreichen. Über den Sol-Gel-Prozeß hergestellte Pulver sind besonders feinkörnig und lassen sich anschließend gut auf pulvertechnologischem Wege oder durch Plasmaspritzen weiter verarbeiten.

Bei dem Sol-Gel-Prozeß wird vorzugsweise aus den Zugabebestandteilen im gewünschten Masseverhältnis Alkoholate hergestellt und gemischt, anschließend vorzugsweise durch Zugabe von Wasser oder durch pH-Wert-Verschiebung, Festbestandteile aus der Lösung ausgefällt, die anschließend von der überschüssigen Lösung getrennt und getrocknet, vorzugsweise bei Temperaturen zwischen etwa 500°C und 1200°C geglüht werden.

Gemäß einer Variante dieses Verfahrens werden nach der Ausfällung der Feststoffbestandteile und der anschließenden Trennung von der überschüssigen Lösung zusätzlich organische Bindemittel zugegeben, bevor die Trocknung vorzugsweise durch Sprühtrocknen erfolgt und schließlich eine Glühbehandlung, vorzugsweise bei Temperaturen zwischen etwa 500°C und 1200°C durchgeführt wird.

Bei beiden Varianten können als Alkoholate Verbindungen der Form (-OCₙH₂ₙ₊₁) verwendet werden, wobei - OCₙH₂ₙ₊₁ Methoxy-, Ethoxy-, Isopropoxy-, Propoxy-, Butoxy-, Isobutoxy-Alkoholate mit 1≤n≤5 bedeutet.

Alternativ können wasserlösliche Salze von M (Lanthan oder Neodym) und Me (insbesondere Magnesium), vorzugsweise Acetate, Citrate, Karbonate, Hydrogenkarbonate, Formiate, Hydroxide oder Nitrate zu einer Lösung aus Aluminium-Alkoholat zugegeben und anschließend ausgefällt werden.

Wird die erste Komponente mit der zweiten Komponente dotiert, so erfolgt dies gemäß einer Weiterbildung der Erfindung bei der flüssigen Verfahrensführung, indem die zweite Komponente in löslicher Form zugegeben wird, bevor die Trocknung oder Ausfällung (soweit der Sol-Gel-Prozeß verwendet wird) erfolgt.

Erfolgt dagegen die Verfahrensführung trocken (mixed-oxide-Verfahren), so können die Bestandteile der zweiten Komponente als Pulver zugegeben werden und gemeinsam mit den übrigen Bestandteilen geglüht und in fester Phase zur chemischen Umsetzung gebracht werden.

Wie zuvor bereits erwähnt, läßt sich das erfindungsgemäße Wärmedämmaterial entweder in Pulverform durch Plasmaspritzen auf das zu beschichtende Bauteil auftragen oder aber anschließend auf pulvertechnologischem Wege verarbeiten, also etwa durch axiales Kaltpressen, isostatisches Kaltpressen oder Schlickergießen und anschließendes Sintern vorzugsweise unter leicht reduzierender Atmosphäre bei Temperaturen von mindestens etwa 1500°C oder durch Extrudieren oder Foliengießen mit entsprechender anschließender Wärmebehandlung zu Massivbauteilen verarbeiten.

Gemäß einer Variante der Erfindung kann aus dem Pulver auch ein keramischer Schaum hergestellt werden, indem nämlich entweder ein Polymerschaum mit Schlicker gefüllt wird, dann das Lösungsmittel vorzugsweise bei Temperaturen zwischen etwa 200°C und 400°C ausgetrieben wird, oder indem in niedrigviskose Polymere eine Suspension mit dem Pulver eingebracht wird, diese mit Treibgas aufgeschäumt wird und schließlich bei beiden Varianten eine Glühbehandlung vorzugsweise zunächst im Bereich zwischen etwa 900°C und 1100°C und anschließend bei etwa 1400°C bis 1700°C durchgeführt wird.

Es versteht sich, daß die Merkmale der Erfindung nicht nur in der jeweils angegebenen Kombination, sondern auch in anderen Kombinationen oder in Alleinstellung verwendbar sind, ohne den Rahmen der Erfindung zu verlassen.

Die Erfindung wird nunmehr unter Bezugnahme auf die Zeichnung näher erläutert. Es zeigen:
- Fig.1: eine Darstellung der kristallographischen Einheitszellen der Magnetoplumbit-Phasen;
- Fig. 2: eine schematische Darstellung der Art der Besetzung einer Spiegelebene in den Magnetoplumbit-Phasen;
- Fig. 3: das Zustandsdiagramm des Systems La₂O₃/Al₂O₃/MgO (in Mol-%);
- Fig. 4: eine REM-Aufnahme einer Lanthan-Magnetoplumbit-Probe nach einer Temperung bei 1570°C über 10 Stunden;
- Fig. 5: das Ergebnis einer EDX-Analyse, die in einem Rasterelektronenmikroskop durchgeführt wurde und das Ergebnis eines Korrosionsversuches mit Cr₂O₃ zeigt;
- Fig. 6: das Ergebnis einer EDX-Analyse, die in einem Rasterelektronenmikroskop durchgeführt wurde und das Ergebnis eines Korrosionsversuches mit NiO zeigt;
- Fig. 7: das Ergebnis einer Röntgen-Pulverdiffraktometrie an einem nach dem über die flüssige Herstellungsroute hergestellten Pulver, aus dem an Hand der JCPDS-Karten für die LaA₁₁O₁₈-Phase und für die LaMgAl₁₁O₁₉-Phase gemäß Tab. 1 und Tab. 2 die Magnetoplumbit-Phase leicht ermittelbar ist;
- Fig. 8: ein Verfahrensschema für die Pulverherstellung nach dem mixed-oxid-Verfahren;
- Fig. 9: ein Verfahrensschema zur Pulverherstellung nach dem naßchemischen Verfahren;
- Fig. 10: ein Verfahrensschema zur Pulverherstellung aus Alkoholaten über einen Sol-Gel-Prozeß;
- Fig. 11: ein Verfahrensschema der Herstellungsvariante, bei dem die erste Komponente zusätzlich noch mit der zweiten Komponente dotiert wird, um hochkristallisationsfähige Pulver herzustellen und
- Fig. 12 - 15: REM-Aufnahmen einer Probe, die aus einem nach dem Flüssigverfahren hergestellten Pulver durch Sintern erzeugt wurde.

### Struktur des erfindungsgemäßen Wärmedämmaterials

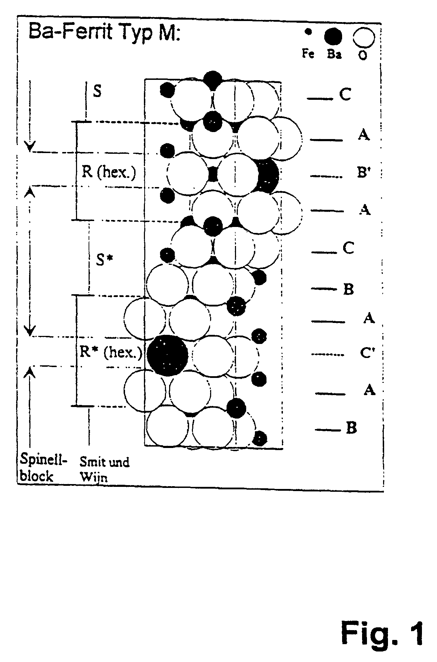

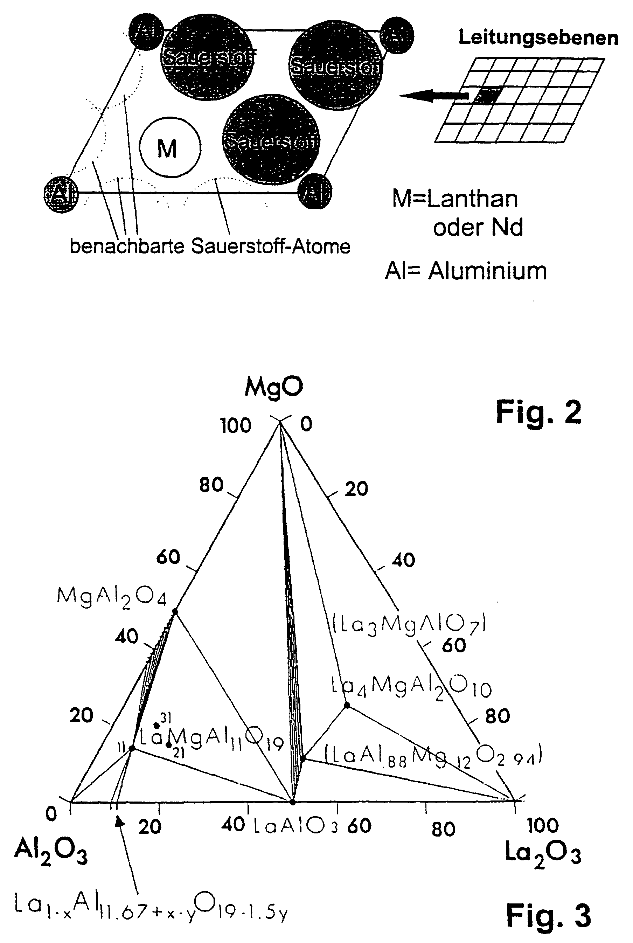

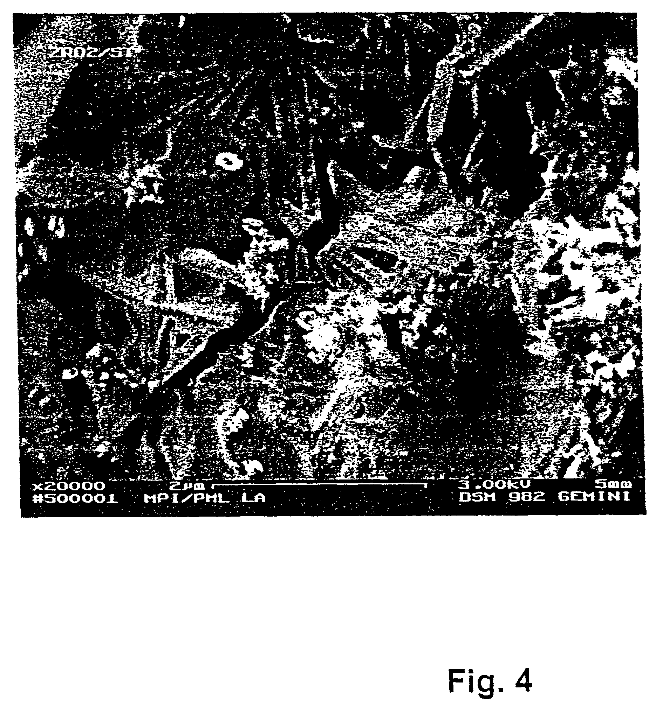

Das erfindungsgemäße Wärmedämmaterial besteht aus einer oxidischen Deckschicht, die im Gegensatz zu Zirkoniumoxid nicht dreidimensional, sondern bevorzugt zweidimensional sintert. Das Material besteht hauptsächlich aus Aluminiumoxid, in dessen Kristallgitter in regelmäßigen Abständen Monolagen aus Lanthanoxid oder Neodymoxid und Aluminiumoxid eingebaut sind (vergl. Fig. 1 und Fig. 2). Dieser Einbau von La₂O₃ führt zur Ausbildung einer Schichtstruktur mit einer sehr charakteristischen, plättchenförmigen Struktur der Kristalle, die in Fig. 4 deutlich zu erkennen ist. Die Hexaaluminate bilden in einem sehr eng begrenzten Zusammensetzungsbereich eine Magnetoplumbit-Phase. Die typische Zusammensetzung ist LaAl₁₁O₁₈. Diese Zusammensetzung besitzt allerdings, strukturell bedingt, sehr viele kationische (Al) und anionische (O) Leerstellen im Gitter, die eine Diffusion von Atomen durch die Struktur erlauben. Durch Zudotierung von zweiwertigen Kationen mit kleinem Ionenradius (typischerweise als MgO, MnO, CoO, ZnO, allgemein als MeO bezeichnet) erweitert sich der Homogenitätsbereich der Phase bis zu MMeAl₁₁O₁₉ (LaMgAl₁₁O₁₉). In dieser idealen Zusammensetzung LaMgAl₁₁O₁₉ besitzt die Verbindung nahezu keine Schwankungsbreite in ihrer Zusammensetzung mehr (vergl. das Phasendiagramm gemäß Fig. 3). Der Homogenitätsbereich ist im Phasendiagramm ausgehend von der Probe 1) zu beiden Seiten hin dargestellt. Die ideale Zusammensetzung der Phase LaMgAl₁₁O₁₉ findet sich an dem Punkt mit der Bezeichnung 1), während die Zusammensetzung der Phase LaAl₁₁O₁₈ (binäres System ohne Zusatz von MgO) auf der unteren Linie zwischen Al₂O₃ und La₂O₃ im Bereich von etwa 90 Mol-% Al₂O₃ abzulesen ist. Die Punkte 1), 2) und 3) im Phasendiagramm bezeichnen Proben, die Korrosionstests unterzogen wurden.

Das Wärmedämmaterial besitzt allgemein die Summenformel M₂O₃xMeO-yAl₂O₃, wobei M Lanthan oder Neodym darstellt, und die Koeffizienten x, y den bevorzugten Zusammensetzungsbereich mit 0,2≤x≤3,3 und 10,0≤y≤13 beschreiben. Die Bestandteile der Idealzusammensetzung LaMgAl₁₁O₁₉ lassen sich bei Punkt 1) aus dem Phasendiagramm ablesen und mit etwa 7,1 Mol-% La₂O₃, etwa 14,3 Mol-% MgO und etwa 78,6 Mol-% Al₂O₃ berechnen.

Bei dem erfindungsgemäßen Wärmedämmaterial läßt sich also durch die Dotierung mit MeO (z.B. MgO) ein Abbau der Leerstellen im Gitter erreichen. Dies bedeutet, daß das Material bei der Zusammensetzung MMeAl₁₁O₁₉ keinerlei kristallographische Defekte in der Struktur mehr besitzt, oder anders formuliert, alle Leerstellen in der Struktur sind durch Mg- und ein zusätzliches O-Atom besetzt. Diese vollständige Besetzung aller vorhandenen Gitterplätze in der Struktur führt zu der erwünschten hohen Stabilität im Temperaturbereich oberhalb von 1100°C.

### Nachweis

Die Magnetoplumbit-Phasen lassen sich relativ einfach mittels XRD (Röntgen-Pulverdiffraktometrie) nachweisen, da die JCPDS-Karten (26-0873, siehe Tab. 1) für die LaMgAL₁₁O₁₉-Phase und (33-0699, siehe Tab. 2) für die La₁₁O₁₈-Phase bekannt sind und charakteristische Interferenzen bzw. Reflex-Signale festzustellen sind.

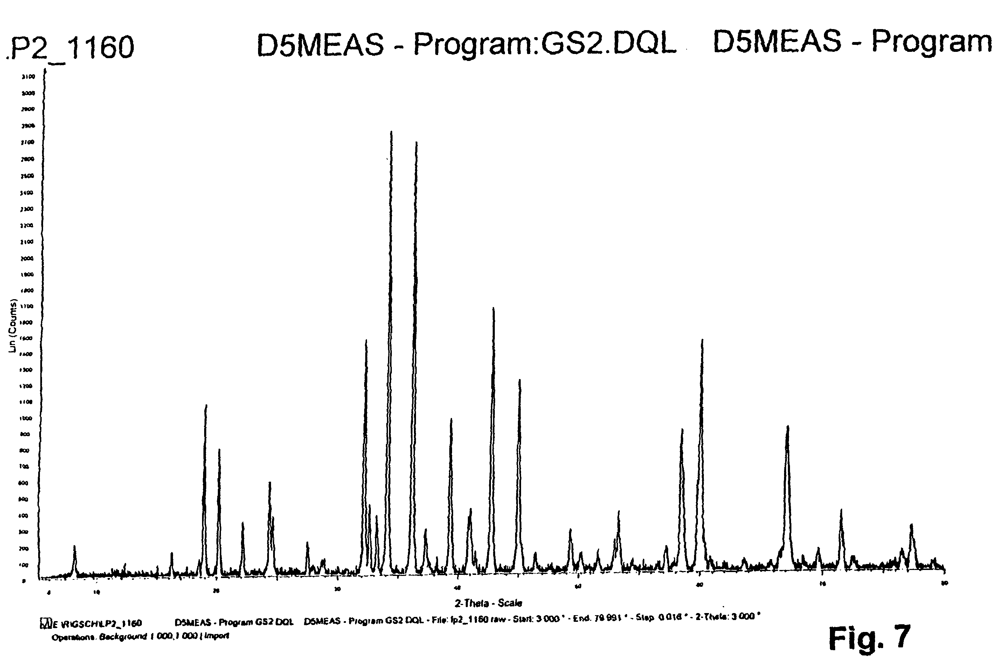

Die Magnetoplumbit-Phasen sind an Hand der JCPDS-Karten röntgenographisch sehr leicht nachzuweisen, da die auftretenden Reflexe sehr zahlreich und in ihrer Anordnung für die Struktur sehr charakteristisch sind (vergl. Fig. 7). Im Gegensatz dazu zeigt ZrO₂ nur ein sehr einfaches Beugungsdiagramm.

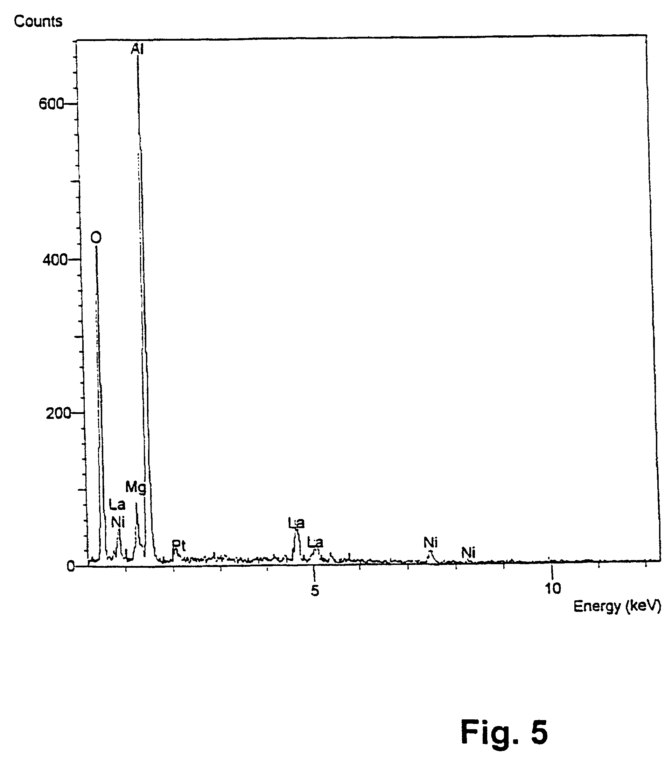

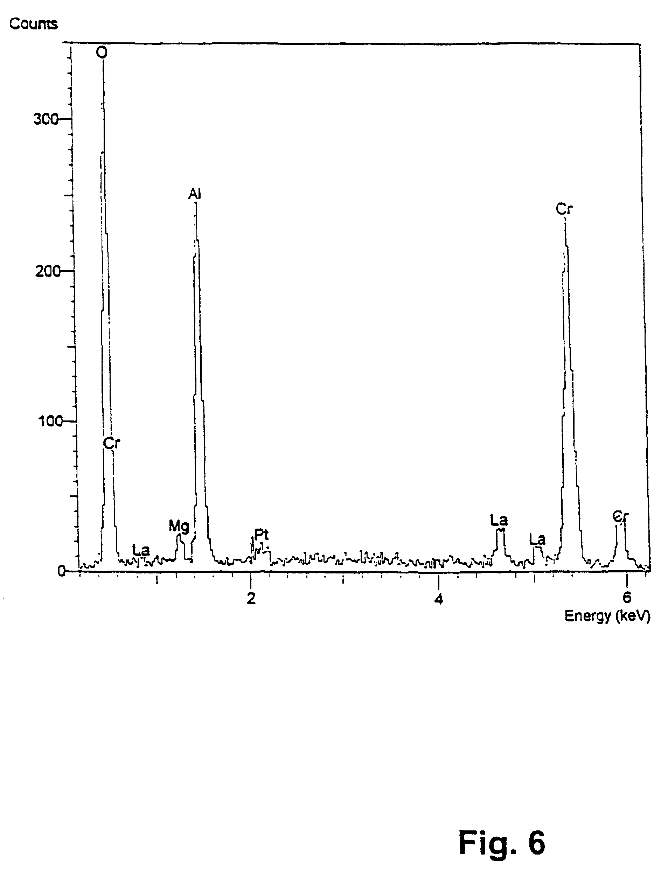

Da sich aber beide Zusammensetzungen kaum in ihrer chemischen Zusammensetzung unterscheiden und beide in derselben Raumgruppe (P6₃/mmc) kristallieren, ist eine Unterscheidung der chemischen Zusammensetzung nur anhand der Röntgen-Pulverdiffraktometrie schwierig. Hierfür muß dann eine separate chemische Analyse durchgeführt werden. In den Fig. 5 und 6 sind zwei EDX-Messungen, die im REM durchgeführt wurden und die jeweils einen Korrosionsversuch mit Cr₂O₃ und NiO zeigen, dargestellt. Man sieht sehr deutlich, daß alle beteiligten Elemente an Hand ihrer charakteristischen Energiespektren nachgewiesen werden können. Die Zusammensetzung der Magnetoplumbit-Phase aus A1, Mg, La und 0 ist deutlich zu erkennen. Eine quantitative Auswertung der EDX-Werte ergibt die Zusammensetzung der Magnetoplumbit-Phase. Eine typische röntgendiffraktometrische Messung der hergestellten LaMgAl₁₁O₁₉-Probe ist exemplarisch in Fig. 7 dargestellt. Ein Vergleich mit der JCPDS-Karte (26-0873) gemäß Tab. 1 zeigt die vollständige Übereinstimmung.

### Eigenschaften

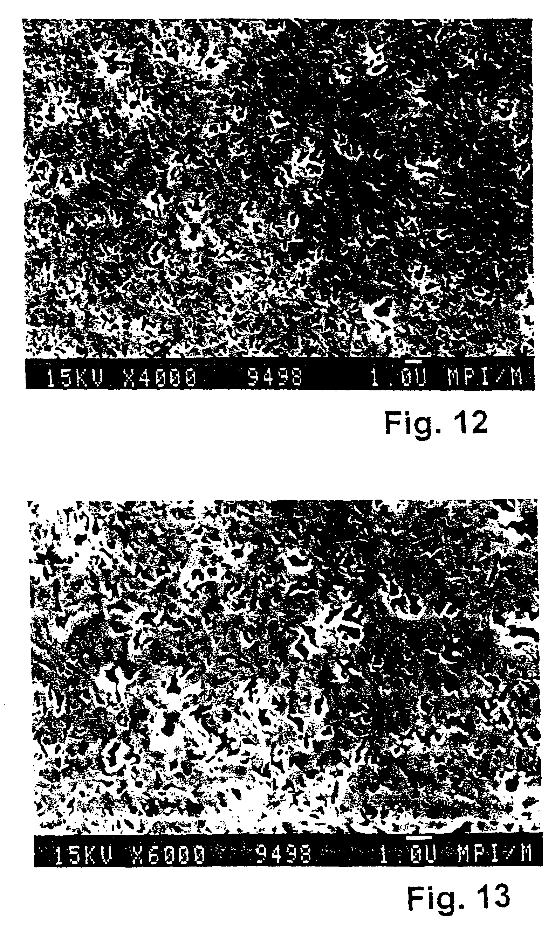

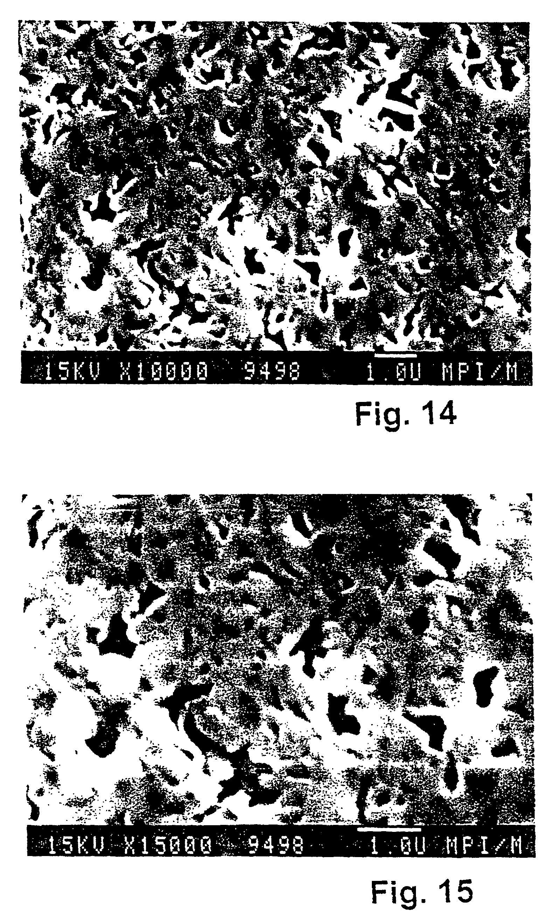

Die auch bei diesem Material vorhandene Triebkraft zum Sintern führt dann hauptsächlich zu einer Kornvergröberung in zwei Dimensionen (vergl. Fig. 4). Durch dieses Sinterverhalten verdichtet sich die Deckschicht nicht als Ganzes. Während des Nachsintervorganges kommt es eher zu einer Vergröberung einzelner Poren. Die Porosität der Schicht bleibt auch bei Temperaturen um 1400°C erhalten (vergl. Fig. 12 bis 15). Die funktionelle Eigenschaft als Wärmebarriere ändert sich auch nach der abgelaufenen Kornvergröberung nicht.

Durch die plattenförmige Struktur des Gefüges bilden sich Hohlräume im Mikrometer-Bereich und Sub-Mikrometer-Bereich, die zu einer sehr niedrigen Wärmeleitfähigkeit der Schicht (λ_{RT} = 0,8-2,2 [W/mK], λ₁₂₀₀ = 1,2-2,6 [W/mK]) im Anwendungstemperaturbereich führen. Der thermische Ausdehnungskoeffizient des Wärmedämmaterials liegt zwischen 9,5 und 10,7 x 10⁻⁶ [K⁻¹] im Temperaturbereich zwischen Raumtemperatur und 1200°C und damit in derselben Größenordnung wie chromnickelhaltige Stähle.

Ebenfalls durch diese Struktur bedingt steigt der E-Modul der Schicht während der Alterung in der Anwendung im Vergleich zu herkömmlichem Zirkonoxid wesentlich langsamer an. Um dies zu untersuchen, wurde jeweils eine ZrO₂-Probe und eine LaMgAl₁₁O₁₉-Probe nebeneinander im Ofen bei 1650 bis 1690°C für 100 Stunden unter Luft ausgelagert. Der E-Modul von La-Magnetoplumbit stieg während des Versuchs nur auf die Hälfte des Wertes von Zirkonoxid an. Dies führt ganz wesentlich zu geringeren thermomechanischen Spannungen, die während der Anwendung zwischen der Wärmedämmschicht und dem metallischen Untergrund auftreten, da sich durch die geringe Festigkeit Rißstrukturen bevorzugt in der keramischen Wärmedämmschicht bilden können, und so einem spannungsinduzierten flächigen Abplatzen der Keramikschicht entgegengewirkt wird. In Tab. 3 sind die Ergebnisse der E-Modul-Messungen im Vergleich zusammengefaßt.

Ein weiterer wesentlicher Vorteil des erfindungsgemäßen Wärmedämmaterials besteht darin, daß es gegen inert gegen den Angriff von Alkaligehalten der Atmosphäre (Na₂O, NaCl, K₂O, KCl) ist.

Während bisherige, auf ZrO₂ basierende Wärmedämmschichten mit den Hydroxiden oder Karbonaten von Na₂O und K₂O, oder durch das in Meeresnähe und im Winter in der Atmosphäre enthaltene NaCl niedrigschmelzende Phasen bilden, die zu einer starken Verdichtung der Wärmedämmschicht bei Anwendungstemperaturen von unter 1000°C führen, führt ein solcher Eintrag bei dem erfindungsgemäßen Werkstoff eher zu einem erhöhten Plattenwachstum, was die Verdichtung, d.h. das Versintern der Deckschicht anschließend wesentlich erschwert.

### Pulverherstellung

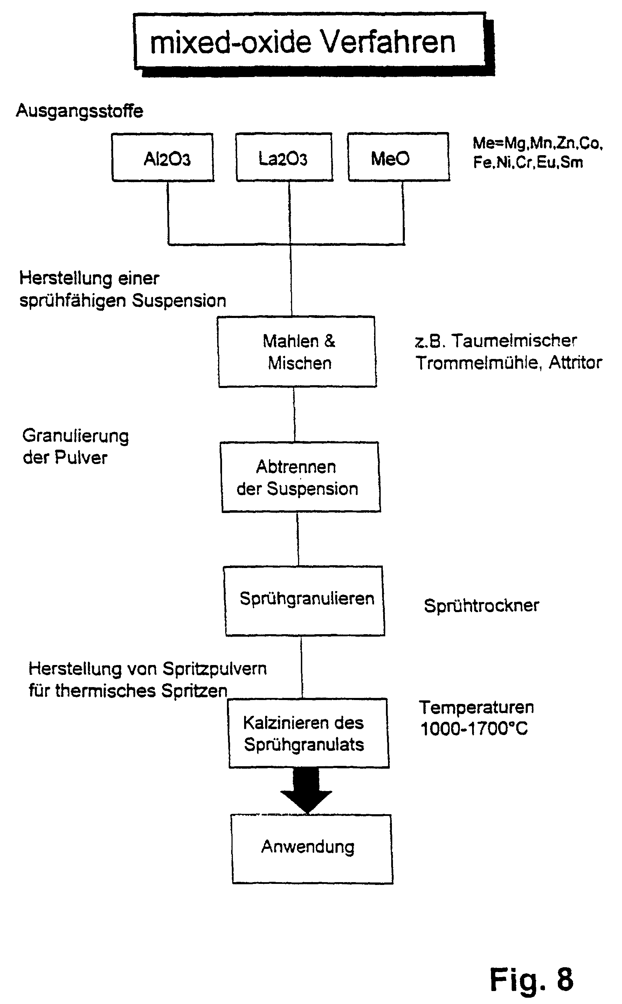

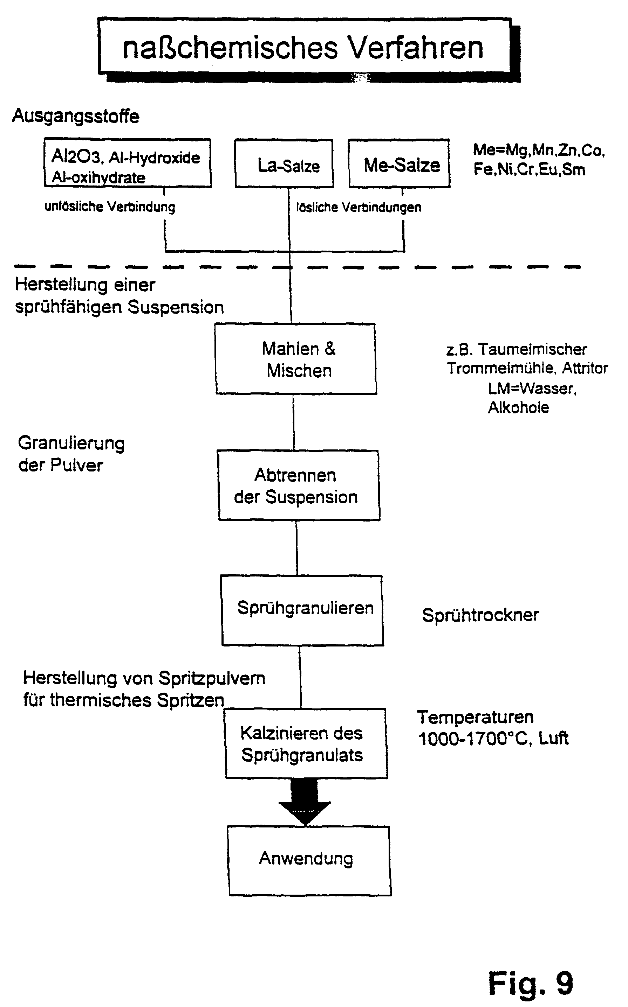

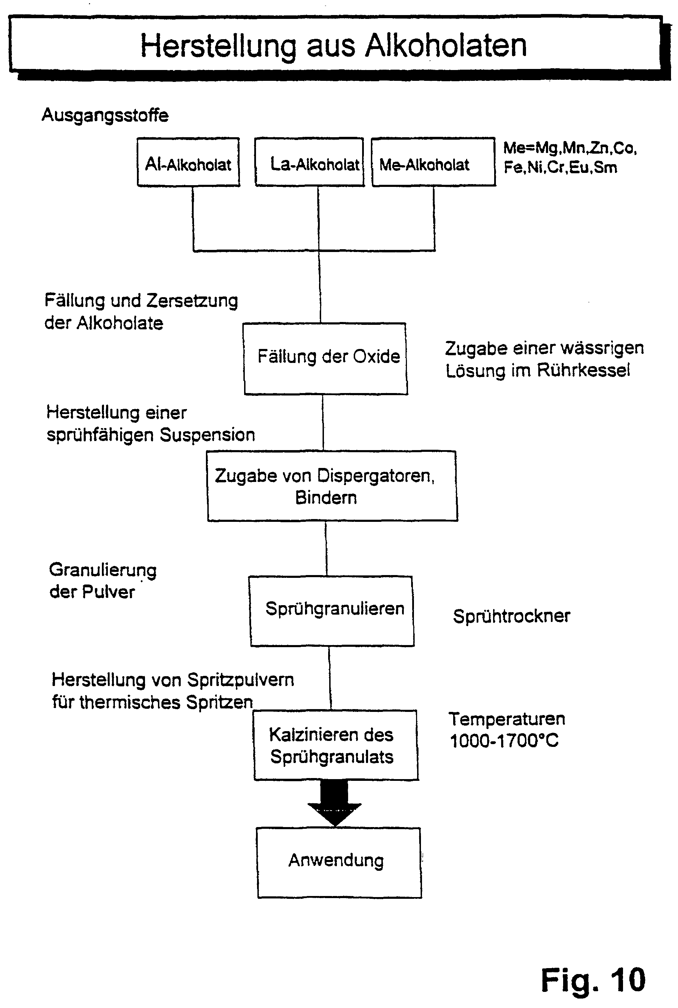

a) Mixed-Oxide-Verfahren
   Eine erste, besonders einfache Möglichkeit der Pulverherstellung besteht in der Verwendung des mixed-oxide-Verfahrens, bei dem die entsprechenden Oxide oder Salze der einzelnen Bestandteile als Ausgangsmaterialien in einer Trommel-, Schwing- oder Taumelmühle möglichst homogen gemischt werden. Der Mischprozeß kann trocken oder naß durchgeführt werden (vergl. Fig. 8). Als Mahlkörper werden in beiden Fällen bevorzugt Aluminiumoxid oder Zirkonoxid-Mahlkörper verwendet. Anschließend werden die Pulver granuliert. Werden Sie in einem flüssigen Medium gemischt, bevorzugt in Wasser, wird diese Suspension anschließend im Sprühtrockner verdüst. Anschließend werden die Pulver vorzugsweise unter Luft bei Temperaturen zwischen 500°C und 1800°C etwa 1 Stunde bis 20 Stunden bis zur Bildung von einphasigen, oxidischen Agglomeraten mit mittleren Durchmessern von 1-200 µm und einer spezifischen Oberfläche zwischen 0,1 und 40 m²/g geglüht.
   Das über den trockenen Herstellungsweg gefertigte Pulver bleibt auch nach dem Mischvorgang mehrphasig. Diese mehrphasige Oxidmischung wird vorzugsweise zunächst mit Bindern versetzt, bevor die Granulierung vorzugsweise durch Sprühtrocknen und die anschließende Glühbehandlung erfolgt. Die Glühbehandlung erfolgt an Luft oberhalb von 500 bis zu etwa 1600°C etwa 0,5 bis 20 Stunden, wobei sich ein homogenes oxidisches Pulver bildet. Auch dabei bilden sich Granulate mit mittleren Durchmessern zwischen 1 und 200 µm und einer spezifischen Oberfläche zwischen 0,1 und 40 m²/g.
b) Beschichtung eines nicht-löslichen Trägerpulvers
   Das Pulver kann auch über einen naßchemischen Prozeß aus Oxiden, Hydroxiden, Acetaten, Karbonaten, Hdrogenkarbonaten oder einem anderen Salz als Ausgangsverbindung hergestellt werden (vgl. Fig. 9). Dabei wird zunächst ein nicht-lösliches Trägerpulver beschichtet.
   Hierzu wird bevorzugt in einem wässrigen Medium gearbeitet. Bevorzugt wird ein nicht-lösliches Oxid, ein Hydroxid oder ein Oxyhydrat von Al₂O₃ als Ausgangsmaterial benutzt und die anderen Komponenten als wasserlösliche Salze, bevorzugt als Karbonate, Hydrogenkarbonate oder Acetate zugesetzt. Nach einem anschließenden Mahl- und Dispergierschritt wird die gebildete Suspension bevorzugt in einem Sprühtrockenprozeß getrocknet und die Pulver anschließend einer Glühbehandlung unterzogen. Bei Temperaturen von 500°C bis 1800°C unter Luft über eine Glühdauer zwischen 1 Stunde und 20 Stunden werden die Pulver zu einphasigen, oxidischen Agglomeraten mit mittleren Durchmessern zwischen 1 bis 200 µm und einer spezifischen Oberfläche zwischen 0,1 bis 40 m²/g gebrannt.
   Als alternative Medien können auch alkoholische Lösungen wie Methanol, Ethanol oder Isopropanol verwendet werden.
c) Herstellung aus Alkoholaten (Sol-Gel-Prozeß)
   Im Unterschied zu den beiden vorher erwähnten Varianten besitzt diese Route den Vorteil, daß die damit hergestellten Pulver extrem homogen in ihrer Zusammensetzung und sehr feinkörnig sind.
   Man verwendet zur Herstellung zweckmäßigerweise AluminiumAlkoholate und Lanthan- bzw. Neodym und Me-Alkoholate (Mg-Alkoholate), also Verbindungen, die entweder schon flüssig sind, oder die in Alkohol und/oder Wasser löslich sind (vgl. Fig. 10). Durch Zugabe von Wasser zu einer alkoholischen Lösung oder durch die Verschiebung des pH-Wertes einer wässrigen Lösung werden die Verbindungen gefällt und bilden zusammen sehr feinkörnige, sehr homogene Mischungen. Diese werden dann von der überstehenden Lösung getrennt und getrocknet. Nach dem Trockenschritt, der bei Temperaturen im Bereich von etwa 500°C bis 1700°C durchgeführt werden kann, bevorzugt im Bereich um etwa 1000°C, bilden sich oxidische Mischungen mit sehr feiner Körnung.
   Gemäß einer Verfahrensvariante ist es möglich, Dispergatoren oder Binder nach der Fällung der Oxide zuzugeben, um eine sprühfähige Suspension herzustellen, wie dies in Fig. 10 dargestellt ist. Anschließend erfolgt das Granulieren des Pulvers bevorzugt im Sprühtrockner und wiederum eine anschließende Kalzinierung des Sprühgranulats bei Temperaturen vorzugsweise im Bereich von etwa 1000°C bis 1700°C.
   Nach der Trennung der gefällten Oxide bzw. Hydroxide von der überstehenden Lösung und etwaiger Zugabe von Dispergatoren und Bindern erhält man eine Masse mit etwa 60 bis 70 % Feststoffanteil, die sich gut sprühtrocknen läßt.
   Als Alkoholate werden hauptsächlich Verbindungen der Form (-OCₙH₂ₙ₊₁) verwendet, wobei die Kürzung OCₙH₂ₙ₊₁ für Methoxy-, Ethoxy-, Isopropoxy-, Propoxy-, Butoxy-, Isobutoxy- (mit n = 1 bis 5) steht, oder es werden wasserlösliche Salze von Lanthan und Magnesium (Acetate, Citrate, Karbonate, Hydrogenkarbonate, Formiate, Hydroxide, Nitrate oder andere wasser- oder alkohollösliche Salze) zu einer Lösung von Al-Alkoholat zugegeben und gleichzeitig, meist durch Wasserzugabe gefällt.
d) Herstellung hochkristallisationsfähiger Pulver
   Während des Mischens und Trocknens in der vorbeschriebenen Weise werden die Pulver zusätzlich mit einer in der "Hexaaluminat"-Phase unlöslichen Fremdphase dotiert, indem eine zweite Komponente zugesetzt wird. Dies hat eine bevorzugte Kristallisation des Aluminats während der Verarbeitung durch Plasmaspritzen, eine erhöhte Haftung und Thermoschock-Beständigkeit zur Folge.
   Bei diesen Zusätzen kann es sich handeln um:
   - ZrO₂ als monokline, tetragonale oder kubische Form (die beiden letztgenannten Phasen jeweils mit MgO, CaO oder Y₂O₃ dotiert),
   - La₂Zr₂O₇, MgZrO₃, Nd₂O₃, HfO₂, Y₂O₃, Yb₂O₃, Eu₂O₃, La₂Hf₂O₇, MgHfO₃,
   - Salze der Alkalioxide (Na₂O, K₂O, Li₂O)

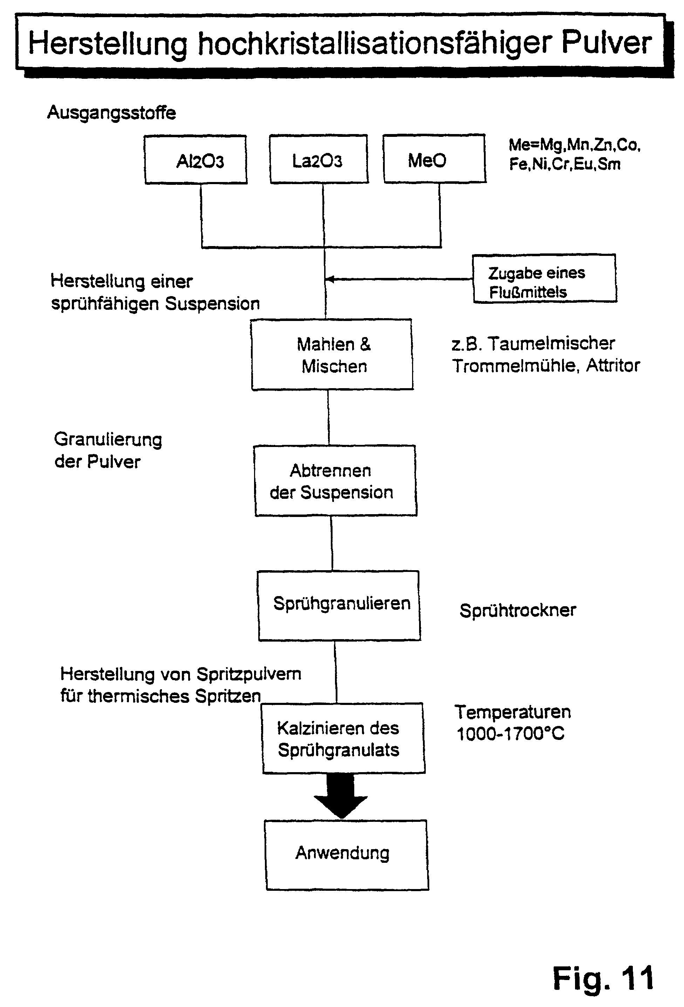

   Die Salze bestehen aus Karbonaten, Hydroxiden, Chloriden, Nitraten, Acetaten, Formiaten, Citraten, Sulfaten, Hydrogenkarbonaten oder Mischsalzen aus den oben beschriebenen Salzen. Ebenfalls möglich sind auch Legierungen oder Mischungen zwischen diesen Substanzen. Der Dotierungsgehalt kann zwischen 0,001 bis 20 Gew.-%, vorzugsweise zwischen 0,1 bis 3 Gew.-% liegen.
   Die Zugabe erfolgt entweder gemäß Fig. 11 als weiteres oxidisches Pulver im naßchemischen oder im mixed-oxide-Prozeß, oder aber in Form löslicher Komponenten bei der Sol-Gel-Herstellung und wird dann während der Pulverherstellung gefällt.
   Bei der Sol-Gel-Route wird dieses Salz entweder ebenfalls während der Pulverherstellung zugegeben und mitgefällt, oder während der Zugabe der Binder und Dispergatoren mit zugegeben, und diese Mischung wird dann sprühgetrocknet.

### Verarbeitung der hergestellten Pulver

Der bevorzugte Anwendungsbereich des Wärmedämmaterials besteht in der Aufbringung von Wärmedämmschichten auf thermisch hochbelastete Metallbauteile, etwa auf hochlegierte Chromnickel-Stähle. Hauptanwendungsgebiete sind Flugzeuggasturbinen oder Turbinen im Wärmekraftmaschinenbereich, sowie thermisch hochbelastete Bauteile im Motorenbau. Beschichtet werden können bewegliche und nicht bewegliche Bauteile. Mit diesen Beschichtungen lassen sich höhere Wirkungsgrade erreichen, da höhere Betriebstemperaturen ermöglicht werden. Der durch die hohen Temperaturen hervorgerufene Verschleiß der Maschinen wird stark erniedrigt.

Die Beschichtungen werden bevorzugt durch Plasmaspritzen des Pulvers aufgetragen, wobei wie zuvor bereits erwähnt, durch Zugabe der zweiten Komponente bevorzugt, die Kristallisationsfähigkeit während der schnellen Abkühlung beim thermischen Spritzen, vor allem an der Grenzfläche zur Metallschicht, und zusätzlich auch die Haftfähigkeit und die Thermoschock-Beständigkeit verbessert werden.

Darüber hinaus lassen sich natürlich aus dem hergestellten Pulver auch auf pulvertechnologischem Wege hochtemperaturbeständige wärmedämmende Massivbauteile herstellen. Hierzu stehen die üblichen pulvertechnologischen Formgebungsverfahren, wie etwa Kaltpressen oder isostatisches Kaltpressen, Schlickergießen und dergleichen zur Verfügung, woraufhin sich der Sinterprozeß in Widerstandsöfen oder gasbefeuerten Öfen eventuell unter leicht reduzierender Atmosphäre bei Temperaturen im Bereich von oberhalb 1600°C anschließt.

Alternativ lassen sich auch keramische Schäume herstellen.

Hierzu werden entweder ein Polymerschaum mit Schlicker gefüllt und bei Temperaturen von etwa 200°C bis 300°C das Lösungsmittel ausgetrieben. Danach erfolgt ein Aufheizen auf etwa 1000°C und schließlich ein Brennen bei etwa 1400°C bis 1700°C.

Alternativ kann eine Suspension in einem niedrig viskosen Polymer mit Treibgas aufgeschäumt werden (z.B. Polyurethan mit Treibgas/Härter). Anschließend werden die Polymere bei Temperaturen um etwa 1000°C ausgetrieben und schließlich der Brennprozeß bei etwa 1400° bis 1700°C durchgeführt.

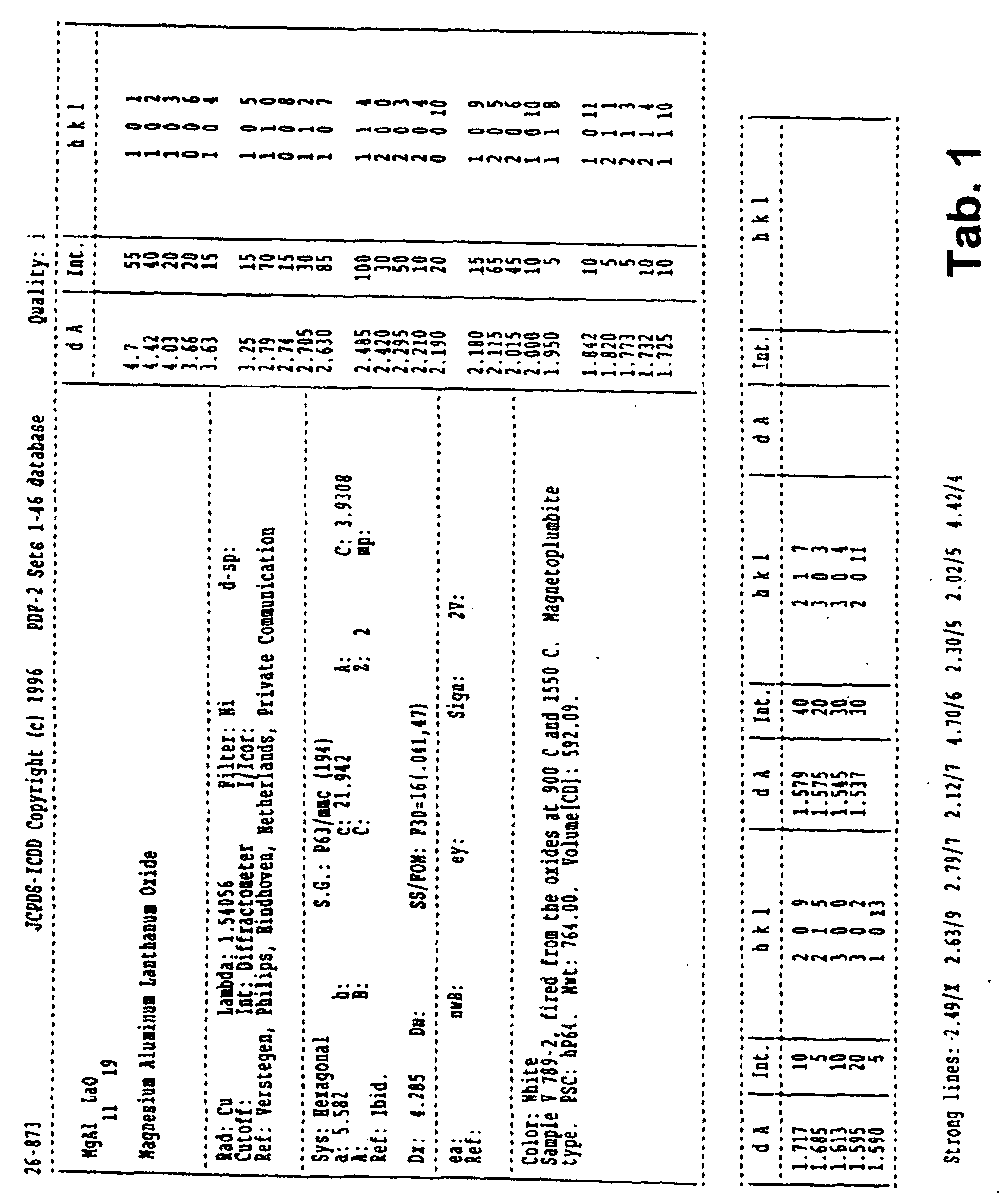

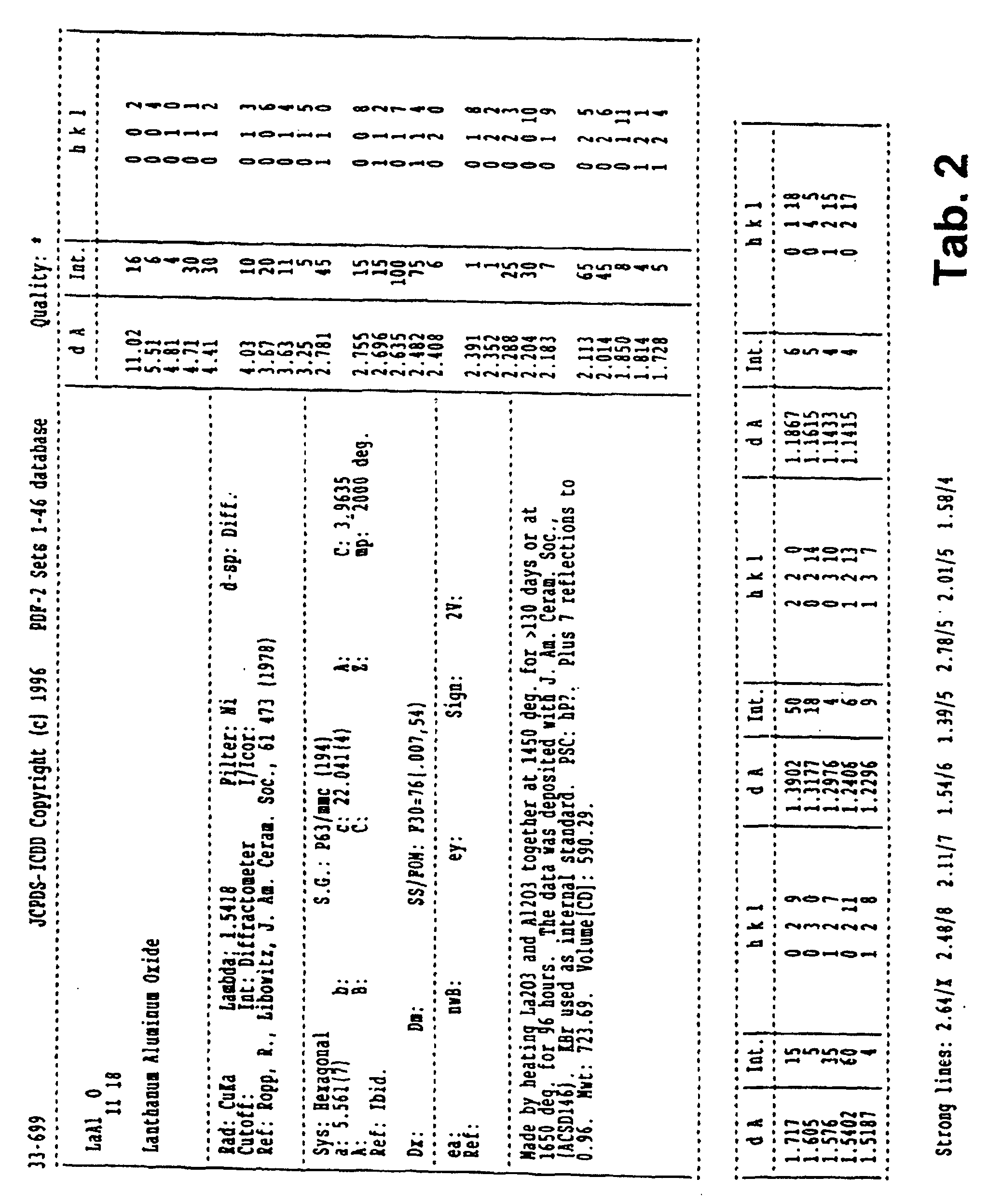

**Tab. 3**

| **Vergleich des E-Moduls von ZrO**_{**2**} **und LaMgAl**_{**11**}**O**_{**19**} **nach Auslagerung bei 1670°C für 100 Stunden an Luft** | |
|---|---|
| Material | E-Modul |
| tetragonale ZrO₂-Probe | 242 GPa |
| LaMgAl₁₁O₁₉-Probe | 127 GPa |

## Patentansprüche

1. Wärmedämmaterial bestehend aus mindestens einer ersten Komponente mit mindestens einer ersten Phase, die stöchiometrisch 1 bis 80 Mol-% an M₂O₃, 0,5 bis 80 Mol-% MeO und als Rest Al₂O₃ mit zufälligen Verunreinigungen enthält, wobei M aus den Elementen Lanthan und Neodym oder Mischungen hiervon ausgewählt ist, und wobei Me aus den Erdalkalimetallen, Übergangsmetallen und den seltenen Erden oder Mischungen hiervon, vorzugsweise aus Magnesium, Zink, Kobalt, Mangan, Eisen, Nickel, Chrom, Europium, Samarium oder Mischungen hiervon, ausgewählt ist.

2. Wärmedämmaterial nach Anspruch 1, bei dem die erste Komponente 1 bis 50 Mol-% M₂O₃ und 1 bis 50 Mol-% MeO, sowie als Rest Al₂O₃ enthält.

3. Wärmedämmaterial nach Anspruch 1 oder 2, bei dem die erste Komponente 1 bis 20 Mol-% M₂O₃ und 2 bis 30 Mol-% MeO, sowie als Rest Al₂O₃ enthält.

4. Wärmedämmaterial nach Anspruch 3, bei dem die erste Komponente 2 bis 20 Mol-% M₂O₃, 5 bis 25 Mol-% MeO, sowie als Rest Al₂O₃ enthält.

5. Wärmedämmaterial nach Anspruch 4, bei dem die erste Komponente etwa 5 bis 10 Mol-% M₂O₃, etwa 10 bis 20 Mol-% MeO, sowie als Rest Al₂O₃ enthält.

6. Wärmedämmaterial nach Anspruch 5, bei dem die erste Komponente etwa 5 bis 9 Mol-% M₂O₃, 12 bis 17 Mol-% MeO, sowie als Rest Al₂O₃ enthält.

7. Wärmedämmaterial nach Anspruch 6, bei dem die erste Komponente etwa 7,1 Mol-% M₂O₃, etwa 14,3 Mol-% MeO, sowie als Rest Al₂O₃ enthält.

8. Wärmedämmaterial nach einem der vorhergehenden Ansprüche, bei dem der Zusatz an M₂O₃ aus La₂O₃ gebildet ist und der Zusatz an MeO aus MgO gebildet ist.

9. Wärmedämmaterial nach einem der vorhergehenden Ansprüche, bei dem die erste Phase eine Hexaaluminatphase der Magnetoplumbit-Struktur ist.

10. Wärmedämmaterial nach Anspruch 9, bei dem die erste Phase die Zusammensetzung MMeAl₁₁O₁₉ oder MAl₁₁O₁₈ aufweist.

11. Wärmedämmaterial nach einem der vorhergehenden Ansprüche, bei dem die erste Komponente als erste oder als weitere Phasen MAlO₃, MeAl₂O₄ oder MeO enthält.

12. Wärmedämmaterial nach einem der vorhergehenden Ansprüche, bei dem die erste Komponente als Kristallisationshilfe für die Hexaaluminatphase mit 0,001 bis 20 Gew.-%, vorzugsweise mit 0,1 bis 10 Gew.-%, insbesondere mit 0,1 bis 3 Gew.-% einer zweiten, in der ersten Komponente weitgehend unlöslichen Komponente dotiert ist.

13. Wärmedämmaterial nach Anspruch 12, bei dem die zweite Komponente zumindest einen der Bestandteile ZrO₂ in monokliner, tetragonaler oder kubischer Form, La₂Zr₂O₇, MgZrO₃, Nd₂O₃, HfO₂, Y₂O₃, Yb₂O₃, Eu₂O₃, La₂Hf₂O₇, MgHfO₃, Oxide oder Salze der Alkalimetalle Natrium, Kalium und Lithium, oder Mischungen oder Legierungen dieser Bestandteile enthält.

14. Wärmedämmaterial nach Anspruch 13, bei dem die in tetragonaler oder kubischer Form vorliegende Phase ZrO₂ mit MgO, CaO oder Y₂O₃ dotiert ist.

15. Wärmedämmaterial nach Anspruch 13 oder 14, bei dem die Salze der Alkalimetalle aus Carbonaten, Chloriden, Nitraten, Acetaten, Formiaten, Citraten, Hydrogencarbonaten oder Mischsalzen der Alkalimetalle bestehen.

16. Verfahren zur Herstellung eines pulverförmigen Wärmedämmaterials nach einem der Ansprüche 1 bis 15, bei dem ein in einem wässrigen oder einem alkoholischen Medium, insbesondere Methanol, Ethanol oder Isopropanol, nicht lösliches Oxid, ein Hydroxid oder ein Oxyhydrat von Al₂O₃ als Ausgangsmaterial verwendet wird, die übrigen Bestandteile der ersten Komponente als lösliche Salze, vorzugsweise als Carbonate, Hydrogencarbonate oder Acetate, zugesetzt und in dem Medium gelöst und dispergiert werden, die gebildete Suspension vorzugsweise nach einem Mahl- und Dispergierschritt getrocknet, vorzugsweise sprühgetrocknet wird, und das sich ergebende Pulver anschließend einer Glühbehandlung unterzogen wird.

17. Verfahren zur Herstellung eines pulverförmigen Wärmedämmaterials nach einem der Ansprüche 1 bis 15, bei dem die Bestandteile der ersten Komponente in Pulverform als Oxide oder Salze in einem Mischer, vorzugsweise einer Trommel- oder Taumelmühle gemischt werden, wobei bevorzugt Mahlkörper aus Al₂O₃ oder ZrO₂ verwendet werden, anschließend das Pulver granuliert und einer Glühbehandlung unterzogen wird.

18. Verfahren nach Anspruch 17, bei dem die Mischung in einem flüssigen Medium durchgeführt wird und anschließend eine Trocknung, vorzugsweise eine Sprühtrocknung durchgeführt wird, bevor die Glühbehandlung erfolgt.

19. Verfahren nach Anspruch 17, bei dem die Mischung trocken durchgeführt wird, das erhaltene Pulver mit Bindern versetzt und granuliert wird, bevor die Glühbehandlung durchgeführt wird.

20. Verfahren nach einem der Ansprüche 16 bis 19, bei dem die Glühbehandlung vorzugsweise an Luft, vorzugsweise über 0,5 bis 20 Stunden in einem Temperaturbereich von 300 °C bis 1800 °C, erfolgt.

21. Verfahren zur Herstellung eines pulverförmigen Wärmedämmaterials nach einem der Ansprüche 1 bis 15, bei dem das Pulver über einen Sol-Gel-Prozeß mit anschließender Trocknung und Glühbehandlung hergestellt wird.

22. Verfahren nach Anspruch 20, bei dem aus den Zugabebestandteilen im gewünschten Masseverhältnis Alkoholate hergestellt und gemischt werden, vorzugsweise durch Zugabe von Wasser oder durch pH-Wert-Verschiebung, Festbestandteile aus der Lösung ausgefällt werden, von der überschüssigen Lösung getrennt und getrocknet, vorzugsweise bei Temperaturen zwischen etwa 500 °C und 1000 °C geglüht werden.

23. Verfahren nach Anspruch 21, bei dem aus den Zugabebestandteilen im gewünschten Masseverhältnis Alkoholate hergestellt und gemischt werden, dann vorzugsweise durch Zugabe von Wasser oder durch pH-Wert-Verschiebung Festbestandteile aus der Lösung ausgefällt werden, die Festbestandteile von der überschüssigen Lösung getrennt werden, dann organische Bindemittel zugegeben werden, dann vorzugsweise durch Sprühtrocknen getrocknet und schließlich einer Glühbehandlung, vorzugsweise bei Temperaturen zwischen etwa 500 °C und 1000 °C, unterzogen werden.

24. Verfahren nach Anspruch 22 oder 23, bei dem als Alkoholate Verbindungen der Form (-OCₙH₂ₙ₊₁) verwendet werden, wobei - OCₙH₂ₙ₊₁ Methoxy-, Ethoxy-, Isopropoxy-, Propoxy-, Butoxy-, Isobutoxy-Alkoholate mit 1≤n≤5 bedeutet.

25. Verfahren nach Anspruch 21, bei dem wasser- oder alkohollösliche Salze von M und Me, vorzugsweise Acetate, Citrate, Carbonate, Hydrogencarbonate, Formiate, Hydroxide oder Nitrate, zu einer Lösung aus Aluminium-Alkoholat zugegeben und anschließend ausgefällt werden.

26. Verfahren nach Anspruch 18 oder 21, bei dem zur Dotierung der ersten Komponente mit der zweiten Komponente die Bestandteile der zweiten Komponente in löslicher Form zugegeben werden, bevor die Trocknung oder Ausfällung erfolgt.

27. Verfahren nach einem der Ansprüche 16 bis 26, bei dem die Bestandteile der zweiten Komponente als Pulver zugegeben werden und gemeinsam mit den übrigen Bestandteilen geglüht werden.

28. Verfahren zum Aufbringen einer hochwarmfesten Wärmedämmschicht auf ein Bauteil, bei dem ein Pulver nach einem der Ansprüche 16 bis 27 hergestellt wird und dieses durch Plasmaspritzen auf das Bauteil aufgetragen wird.

29. Verfahren zum Herstellen eines hochtemperaturbeständigen wärmedämmenden Bauteils, bei dem ein Pulver nach einem der Ansprüche 16 bis 27 hergestellt wird und die Formgebung pulvertechnologisch erfolgt, insbesondere durch axiales Kaltpressen, isostatisches Kaltpressen oder Schlickergießen und anschließendes Sintern vorzugsweise unter leicht reduzierender Atmosphäre bei Temperaturen von mindestens 1500 °C, oder durch Extrudieren, Spritzgießen oder Foliengießen.

30. Verfahren zum Herstellen eines hochtemperaturbeständigen wärmedämmenden Bauteils, bei dem ein Pulver nach einem der Ansprüche 16 bis 27 hergestellt wird und zu einem keramischen Schaum verarbeitet wird, indem entweder ein Polymerschaum mit Schlicker gefüllt wird, dann das Lösungsmittel vorzugsweise bei Temperaturen zwischen 200 °C und 400 °C ausgetrieben wird, oder indem in niedrig viskose Polymere eine Suspension mit einem Pulver nach einem der Ansprüche 17 bis 27 eingebracht wird, diese mit Treibgas aufgeschäumt wird, und schließlich eine Glühbehandlung vorzugsweise zunächst im Bereich zwischen etwa 900 °C und 1100 °C und schließlich bei etwa 1400 °C bis 1700 °C durchgeführt wird.

## Claims

1. Thermal insulating material consisting of at least one first component with at least one first phase, which stoichiometrically contains 1 to 80 mol-% of M₂O₃, 0.5 to 80 mol-% MeO and a remainder of Al₂O₃ with incidental impurities, wherein M is selected from the elements lanthanum and neodymium or mixtures thereof and wherein Me is selected from the alkaline earth metals, transition metals or the rare earths or mixtures thereof, preferably selected from magnesium, zinc, cobalt, manganese, iron, nickel, chromium, europium, samarium or mixtures thereof.

2. Thermal insulating material of claim 1, wherein the first component contains 1 to 50 mol-% of M₂O₃ and 1 to 50 mol-% MeO with the remainder of Al₂O₃.

3. Thermal insulating material of claim 1 or 2, wherein the first component contains 1 to 20 mol-% of M₂O₃ and 2 to 30 mol-% MeO with the remainder of Al₂O₃.

4. Thermal insulating material of claim 3, wherein the first component contains 2 to 20 mol-% of M₂O₃ and 5 to 25 mol-% MeO with the remainder of Al₂O₃.

5. Thermal insulating material of claim 4, wherein the first component contains about 5 to 10 mol-% of M₂O₃ and about 10 to 20 mol-% MeO with the remainder of Al₂O₃.

6. Thermal insulating material of claim 5, wherein the first component contains about 5 to 9 mol-% of M₂O₃ and 12 to 17 mol-% MeO with the remainder of Al₂O₃.

7. Thermal insulating material of claim 6, wherein the first component contains about 7.1 mol-% of M₂O₃ and about 14.3 mol-% MeO with the remainder of Al₂O₃.

8. Thermal insulating material of one of the preceding claims, wherein the additive M₂O₃ is Al₂O₃ and the additive MeO is MgO.

9. Thermal insulating material of one of the preceding claims, wherein the first phase is a hexa-aluminate phase of the magnetoplumbite structure.

10. Thermal insulating material of claim 9, wherein the first phase comprises the composition MMeAl₁₁O₁₉ or MAl₁₁O₁₈.

11. Thermal insulating material of one of the preceding claims, wherein the first component comprises MAlO₃, MeAl₂O₄ or MeO as the first phase or as further phases.

12. Thermal insulating material of one of the preceding claims, wherein the first component is doped with 0.001 to 20 wt.-%, preferably with 0.1 to 10 wt.-%, more preferably with 0.1 to 3 wt.-% of a second component insoluble in the first component as a crystallisation aid for the hexa-aluminate phase.

13. Thermal insulating material of claim 12, wherein the second component comprises at least one of the compounds ZrO₂ in monoclinic, tetragonal or cubic form, La₂Zr₂O₇, MgZrO₃, Nd₂O₃, HfO₂, Y₂O₃, Yb₂O₃, Eu₂O₃, La₂Hf₂O₇, MgHfO₃, oxides or salts of the alkali metals sodium, potassium, lithium or mixtures or alloys of these compounds.

14. Thermal insulating material of claim 13, wherein the ZrO₂ phase present in tetragonal or cubic form is doped with MgO, CaO or Y₂O₃.

15. Thermal insulating material of claim 13 or 14, wherein the salts of the alkali metals consist of carbonates, chlorides, nitrates, acetates, formates, citrates, hydrogen carbonates or mixed salts of the alkali metals.

16. Method of producing a powder-like thermal insulating material according to one of the claims 1 to 15, wherein an insoluble oxide, a hydroxide or an oxy-hydrate of Al₂O₃ is employed as starting material in an aqueous or an alcoholic medium, in particular methanol, ethanol or isopropanol, the remaining compounds of the first component are added as soluble salts, preferably as carbonates, hydrogen carbonates or acetates and are dissolved and dispersed in the medium, the formed suspension is dried preferably after a grinding and dispersing step, preferably spray dried and the resulting powder is subsequently subjected to an annealing treatment.

17. Method of producing a powder-like thermal insulating material of one of the claims 1 to 15, wherein the compounds of the first component are mixed in powder form as oxides or salts in a mixer, preferably a drum or tumbling grinder, wherein Al₂O₃ or ZrO₂ is preferably employed as grinding bodies, subsequently the powder is granulated and subjected to an annealing treatment.

18. Method of claim 17, wherein the mixing is carried out in a liquid medium and subsequently a drying, preferably a spray drying, is performed before the annealing treatment.

19. Method of claim 17, wherein the mixing is carried out under dry conditions, the obtained powder being mixed with binders and granulated before the annealing treatment is carried out.

20. Method of one of the claims 16 to 19, wherein the annealing treatment takes place preferably in the presence of air, preferably for 0.5 to 20 hours in a temperature range of 300°C to 1800°C.

21. Method of producing a powder-like thermal insulating material of one of the claims 1 to 15, wherein the powder is produced by a sol-gel process with subsequent drying and annealing.

22. Method of claim 20, wherein alcoholates are produced and mixed from the starting compounds in the desired mass ratios, solids are precipitated from the solution, preferably by addition of water or by pH value modification, are separated from the excess solution and dried, and are annealed preferably at temperatures between 500°C and 1000°C.

23. Method of claim 21, wherein alcoholates are produced and mixed from the starting compounds in the desired mass ratios, then solids are precipitated from the solution preferably by the addition of water or by pH value modification, the solids are separated from the excess solution, organic binding agents are then added, then dried preferably by spray drying and finally subjected to an annealing treatment preferably at temperatures between about 500°C and 1000°C.

24. Method of claim 22 or 23, wherein compounds of the form (-OCₙH₂ₙ₊₁) are used as the alcoholates, whereby -OCₙH₂ₙ₊₁ means methoxy, ethoxy, isopropoxy, propoxy, butoxy or isobutoxy alcoholates with 1 ≤ n ≤ 5.

25. Method of claim 21, wherein water or alcohol soluble salts of M and Me, preferably acetates, citrates, carbonates, hydrogen carbonates, formates, hydoxides or nitrates, are added to a solution of aluminum alcoholate and subsequently precipitated.

26. Method of claim 18 or 21, wherein the compounds of the second component in soluble form are added for doping the first component with the second component before the drying or precipitating takes place.

27. Method of any one of claims 16 to 26, wherein the compounds of the second component are added as a powder and are annealed together with the other compounds.

28. Method of applying a highly thermal resistant thermal insulating layer to a part, wherein a powder according to one of claims 16 to 27 is produced and is applied to the part by plasma spraying.

29. Method for producing a highly temperature resistant thermal insulating part, wherein a powder is produced according to one of claims 16 to 27 and is formed by powder technology, in particular by axial cold pressing, isostatic cold pressing or slip casting, with subsequent sintering preferably under a slightly reducing atmosphere at temperatures of at least 1500°C or by extruding, injection moulding or foil moulding.

30. Method for producing a highly temperature resistant thermal insulating part, wherein a powder according to one of claims 16 to 27 is produced and processed to a ceramic foam, by either filling a polymer foam with slip and evaporating the salt preferably at temperatures between 200°C and 400°C or by introducing a suspension with a powder of one of the claims 17 to 27 into a low viscosity polymer, foaming the suspension with a foaming agent, and finally carrying out an annealing treatment preferably at first in the region between about 900°C and 1100°C and finally at about 1400°C to 1700°C.

## Revendications

1. Matériau d'isolation thermique fait d'au moins un premier composant avec au moins une première phase contenant selon un rapport stoechiométrique de 1 à 80% molaires de M₂O₃, de 0,5 à 80% molaires de MeO et, pour le reste, de l'Al₂O₃ avec des impuretés éventuelles, M étant choisi parmi les éléments lanthane et néodyme ou des mélanges de ceux-ci et Me étant choisi parmi les métaux alcalino-terreux, les métaux de transition et les terres rares ou des mélanges de ceux-ci, de préférence parmi le magnésium, le zinc, le cobalt, le manganèse, le fer, le nickel, le chrome, l'europium, le samarium ou des mélanges de ceux-ci.

2. Matériau d'isolation thermique selon la revendication 1, dans lequel le premier composant contient de 1 à 50% molaires de M₂O₃ et de 1 à 50% molaires de MeO ainsi que, pour le reste, de l'Al₂O₃.

3. Matériau d'isolation thermique selon la revendication 1 ou la revendication 2, dans lequel le premier composant contient de 1 à 20% molaires de M₂O₃ et de 2 à 30% molaires de MeO ainsi que, pour le reste, de l'Al₂O₃.

4. Matériau d'isolation thermique selon la revendication 3, dans lequel le premier composant contient de 2 à 20% molaires de M₂O₃, de 5 à 25% molaires de MeO ainsi que, pour le reste, de l'Al₂O₃.

5. Matériau d'isolation thermique selon la revendication 4, dans lequel le premier composant contient environ 5 à 10% molaires de M₂O₃, environ 10 à 20% molaires de MeO ainsi que, pour le reste, de l'Al₂O₃.

6. Matériau d'isolation thermique selon la revendication 5, dans lequel le premier composant contient environ 5 à 9% molaires de M₂O₃, 12 à 17% molaires de MeO ainsi que, pour le reste, de l'Al₂O₃.

7. Matériau d'isolation thermique selon la revendication 6, dans lequel le premier composant contient environ 7,1% molaires de M₂O₃, environ 14,3% molaires de MeO ainsi que, pour le reste, de l'Al₂O₃.

8. Matériau d'isolation thermique selon l'une des revendications précédentes, dans lequel le M₂O₃ ajouté est formé par du La₂O₃ et le MeO ajouté est formé par du MgO.

9. Matériau d'isolation thermique selon l'une des revendications précédentes, dans lequel la première phase est une phase hexa-aluminate de structure magnétoplombite.

10. Matériau d'isolation thermique selon la revendication 9, dans lequel la première phase a pour composition MMeAl₁₁O₁₉ ou MAl₁₁O₁₈.

11. Matériau d'isolation thermique selon l'une des revendications précédentes, dans lequel le premier composant contient comme première phase ou comme autres phases du MAlO₃, du MeAl₂O₄ ou du MeO.

12. Matériau d'isolation thermique selon l'une des revendications précédentes, dans lequel le premier composant est dopé avec 0,001 à 20% en poids, de préférence de 0,1 à 10% en poids et notamment de 0,1 à 3% en poids d'un deuxième composant, pratiquement insoluble dans le premier composant, servant d'auxiliaire de cristallisation pour la phase hexa-aluminate.

13. Matériau d'isolation thermique selon la revendication 12, dans lequel le deuxième composant contient au moins l'un des constituants ZrO₂ sous forme monoclinique, tétragonale ou cubique, La₂ZrO₇, MgZrO₃, Nd₂O₃, HfO₂, Y₂O₃, Yb₂O₃, Eu₂O₃, La₂Hf₂O₇, MgHfO₃, des oxydes ou des sels de métaux alcalins sodium, potassium et lithium, ou bien des mélanges ou des alliages de ces constituants.

14. Matériau d'isolation thermique selon la revendication 13, dans lequel la phase ZrO₂ présente sous forme tétragonale ou cubique est dopée avec du MgO, du CaO ou de l'Y₂O₃.

15. Matériau d'isolation thermique selon la revendication 13 ou la revendication 14, dans lequel les sels de métaux alcalins se composent de carbonates, chlorures, nitrates, acétates, formiates, citrates, hydrogénocarbonates ou de sels mixtes des métaux alcalins.

16. Procédé de préparation d'un matériau d'isolation thermique en poudre selon l'une des revendications 1 à 15, dans lequel on utilise comme matériau de départ un oxyde non soluble dans un milieu aqueux ou alcoolique, en particulier dans le méthanol, l'éthanol ou l'isopropanol, un hydroxyde ou un oxyde hydraté d'Al₂O₃, on ajoute les autres constituants du premier composant sous la forme de sels solubles, de préférence sous la forme de carbonates, hydrogéno- carbonates ou acétates, et on les dissout et on les disperse dans le milieu, on sèche la suspension ainsi formée de préférence après une étape de broyage et de dispersion, de préférence par pulvérisation, et on soumet ensuite la poudre résultante à un traitement de calcination.

17. Procédé de préparation d'un matériau d'isolation thermique en poudre selon l'une des revendications 1 à 15, dans lequel on mélange les constituants du premier composant sous forme d'oxydes ou de sels à l'état de poudre dans un mélangeur, de préférence dans un broyeur à tambour ou un broyeur oscillant, en utilisant préférentiellement des éléments broyeurs en Al₂O₃ ou en ZrO₂, ensuite on granule la poudre et on la soumet à un traitement de calcination.

18. Procédé selon la revendication 17, dans lequel on effectue le mélangeage dans un milieu liquide et ensuite un effectue un séchage, de préférence un séchage par pulvérisation, avant d'effectuer le traitement de calcination.

19. Procédé selon la revendication 17, dans lequel on effectue le mélangeage à sec, on mélange la poudre obtenue avec des liants et on la granule avant d'effectuer le traitement de calcination.

20. Procédé selon l'une des revendications 16 à 19, dans lequel le traitement de calcination se fait à l'air, de préférence pendant une durée de 0,5 à 20 heures dans une plage de température de 300°C à 1800°C.

21. Procédé de préparation d'un matériau d'isolation thermique en poudre selon l'une des revendications 1 à 15, dans lequel on prépare la poudre selon un processus sol-gel suivi d'un séchage et d'un traitement de calcination.

22. Procédé selon la revendication 20, dans lequel, à partir des constituants à ajouter, on prépare et on mélange des alcoolats selon un rapport massique voulu, ensuite on précipite des constituants solides à partir de la solution, de préférence par ajout d'eau ou par décalage du pH, on les sépare de l'excès de solution et on les sèche, de préférence on les calcine à des températures dans la plage de 500°C à 1000°C environ.

23. Procédé selon la revendication 21, dans lequel, à partir des constituants à ajouter, on prépare et on mélange des alcoolats selon un rapport massique voulu, ensuite on précipite des constituants solides à partir de la solution, de préférence par ajout d'eau ou par décalage du pH, on sépare ces constituants solides de l'excès de solution puis on y ajoute des liants organiques, ensuite on les sèche, de préférence par pulvérisation, et enfin on les soumet à un traitement de calcination, de préférence à des températures dans la plage de 500°C à 1000°C environ.

24. Procédé selon la revendication 22 ou la revendication 23, dans lequel on utilise comme alcoolats des composés de forme (-OCₙH₂ₙ₊₁), où -OCₙH₂ₙ₊₁ désigne des méthoxy-, éthoxy-, isopropoxy-, propoxy-, butoxy-, isobutoxyalcoolates avec 1 ≤ n ≤ 5.

25. Procédé selon la revendication 21, dans lequel on ajoute des sels de M ou de Me solubles dans l'eau ou dans un alcool, de préférence des acétates, citrates, carbonates, hydrogénocarbonates, formiates, hydroxydes ou nitrates, à une solution d'alcoolate d'aluminium et ensuite on effectue une précipitation.

26. Procédé selon la revendication 18 ou la revendication 21, dans lequel, pour doper le premier composant avec le deuxième composant, on ajoute les constituants du deuxième composant sous forme soluble avant d'effectuer le séchage ou la précipitation.

27. Procédé selon l'une des revendications 16 à 26, dans lequel on ajoute les constituants du deuxième composant sous forme de poudre et on les calcine conjointement avec les autres constituants.

28. Procédé de dépôt d'une couche d'isolation thermique résistante aux chaleurs élevées, dans lequel on prépare une poudre selon l'une des revendications 16 à 27 et on la dépose par jet de plasma sur l'élément de construction.

29. Procédé de préparation d'un élément de construction thermiquement isolant et résistant aux températures élevées, dans lequel on prépare une poudre selon l'une des revendications 16 à 27 et on la met en forme selon la technologie des poudres, notamment par compression axiale à froid, compression isostatique à froid ou par coulée en barbotine suivie d'un frittage, de préférence sous une atmosphère légèrement réductrice à des températures d'au moins 1500°C, ou par extrusion, moulage par injection ou coulée en feuilles.

30. Procédé de préparation d'un élément de construction thermiquement isolant et résistant aux températures élevées, dans lequel on prépare une poudre selon l'une des revendications 16 à 27 et on la transforme en une mousse céramique, soit en chargeant une mousse polymère avec de la barbotine puis en éliminant le solvant, de préférence à des températures dans la plage de 200°C à 400°C, soit en incorporant dans des polymères de faible viscosité une suspension contenant une poudre selon l'une des revendications 17 à 27, en faisant mousser cette suspension avec un gaz gonflant et enfin en effectuant un traitement de calcination, de préférence d'abord à une température dans la plage de 900°C à 1100°C environ et pour finir à une température dans la plage de 1400°C à 1700°C environ.
